# EUROPEAN PATENT APPLICATION

(11) **EP 4 592 706 A1**
(43) Date of publication of application: **30.07.2025**
(21) Application number: 25151775.1
(22) Date of filing: 14.01.2025
(51) Int. Cl.: G01S 7/481, G01S 7/499

(54) **METASURFACE ELEMENT FOR IMAGING/STRUCTURED LIGHT/DE-SCANNING**

(30) Priority: 23.01.2024 US 202418419962
(71) Applicant: STMicroelectronics International N.V., 1228 Plan-les-Ouates, Geneva (CH)
(72) Inventor: FISSORE, Matteo, EDINBURGH, EH4 2RD (GB)
(74) Representative: Casalonga

(57) **Abstract**

A ranging system includes a source of polarized light generating an emitted light beam, and a metasurface optical element (MOE) positioned to receive the emitted light beam from the source of polarized light and configured to transform the emitted light beam from having linear polarization to having circular polarization of a first handedness. An optical element is positioned to receive the emitted light beam from the MOE and direct the emitted light beam toward a target. The emitted light beam reflects off the target and returns as a reflected light beam to be passed by the optical element back through the MOE as having circular polarization of a second handedness opposite to the first handedness. The MOE is positioned to receive the reflected light beam from the optical element and configured to transform the reflected light beam back to having the linear polarization. A sensor senses the reflected light beam.

## Description

### TECHNICAL FIELD

This disclosure relates to the realm of optical and mechanical systems, encompassing lasers and metasurfaces, and finds particular, but not exclusive application in the domain of 3D scanning or 3D imaging.

### BACKGROUND

In the field of 3D imaging or scanning, a laser system is employed to illuminate a specific scene. Subsequent to illumination, a sensor captures the light reflected from the scene and reconstructs its 3D shape. One approach involves the measurement of the time of flight of the returning light. Given that the speed of light is constant, depth and spatial information can be derived from this time measurement. Such data finds applications in various areas, including object detection and topographical mapping.

In this technical field, Light Detection and Ranging (LIDAR) and Time-of-Flight (TOF) systems are example approaches, each further categorized into flash and scanning mechanisms. Two methods of detection are particularly common, namely staring arrays and de-scanning systems. A staring array employs a fixed detector array with an imaging lens to capture the entire Field of View (FOV) simultaneously, offering the benefit of faster data acquisition and simpler system architecture. A staring array may be used in conjunction with a flash or scanning illumination system. In contrast, de-scanning systems excel in high-resolution and dynamic range by scanning a laser beam across the scene and capturing the FOV one pixel at a time. They achieve this by use of an optical, photonic or optomechanical system to effectively moving a detector in the opposite direction of the scanning beam, thus stabilizing the image onto the detector.

In addition to 3D imaging, scanning optical systems may also be applied to 2D imaging, where only the intensity of the light returning to the imaging system and not its travel time is recorded and utilized. The same optical system used for 3D imaging, comprised of illumination and receiver channels, may also be used in this case.

Some prior solutions for de-scanning often require a mirror for scanning and another synchronized mirror for de-scanning. Alternatives like acousto-optic modulators or optical phased arrays have also been employed.

However, these existing de-scanning solutions come with several drawbacks. For one, two apertures may be needed with these existing solutions, which is functionally disadvantageous. This setup also essentially doubles the scanner cost and the size of the overall device. Furthermore, complex synchronization between the two scanners is required. These methods, while effective, introduce challenges like complex synchronization and the need for multiple optical components, adding to both cost and system complexity.

Some systems further use a polarizer, polarization beam splitter, and a quarter-wave plate to operate both transmission (Tx) and reception (Rx) channels. The need for multiple optical components adds to both the cost and bulk of the system and makes alignment or manufacturing more complicated.

Given these challenges, for applications where a de-scanning system is desired, there exists a pressing need for an integrated, cost-effective approach that simplifies the scanning and de-scanning processes. Further development is therefore needed.

### SUMMARY

Disclosed herein is a ranging system, including: a source of polarized light configured to generate an emitted light beam; a metasurface optical element (MOE) positioned to receive the emitted light beam from the source of polarized light and configured to transform the emitted light beam from having linear polarization to having circular polarization of a first handedness; and an optical element positioned to receive the emitted light beam from the MOE and direct the emitted light beam toward a target. The emitted light beam reflects off the target, and returns as a reflected light beam to be passed by the optical element back through the MOE as having circular polarization of a second handedness opposite to the first handedness. The MOE is positioned to receive the reflected light beam from the optical element and configured to transform the reflected light beam back to having the linear polarization. A sensor is configured to sense the reflected light beam.

The optical element may be a scanner positioned to receive the emitted light beam after transmission through the MOE and configured to direct the emitted light beam toward the target and scan the emitted light beam across the target in a scan pattern, and to de-scan the reflected light beam reflected back from the target before transmission through the MOE.

The scanner may be a micromirror.

A quarter-wave plate may be positioned between the MOE and the optical element.

The circular polarization of the first handedness may be left-hand circular polarization (LHCP) and the circular polarization of the second handedness may be right-hand circular polarization (RHCP).

The circular polarization of the second handedness may be left-hand circular polarization (LHCP) and the circular polarization of the first handedness may be right-hand circular polarization (RHCP).

The source of polarized light may include one or more VCSELs or Edge-Emitting Lasers (EELs).

The MOE may also function to collimate the emitted light beam.

The sensor may be a line sensor.

In some instances, only imaging, light detection, or measurement is performed by the system, and time-of-flight or ranging information is not utilized by the system in those instances.

Method aspects are disclosed herein. Indeed, disclosed herein is a method of ranging, including: generating an emitted light beam using a source of polarized light; transmitting the emitted light beam through a metasurface optical element (MOE), thereby transforming the emitted light beam from having linear polarization to having circular polarization of a first handedness; directing the transformed emitted light beam toward a target via an optical element; receiving a reflected light beam reflected from the target by the optical element and directing the reflected light beam to the MOE as having circular polarization of a second handedness opposite the first handedness; passing the reflected light through the MOE, transforming the reflected light beam back to having linear polarization; and sensing the reflected light beam with a sensor.

The method may further include: scanning the emitted light beam across the target in a scan pattern using a scanner positioned to receive the emitted light beam after transmission through the MOE; and de-scanning the reflected light beam reflected back from the target using the scanner before transmission through the MOE.

The scanning and de-scanning may be performed one or more micromirrors.

The scanning and de-scanning may be performed using an acousto-optic modulator.

The method may further include passing the emitted light beam through a quarter-wave plate positioned between the MOE and the scanner.

The circular polarization of the first handedness may be left-hand circular polarization (LHCP) and the circular polarization of the second handedness may be right-hand circular polarization (RHCP).

The circular polarization of the second handedness may be left-hand circular polarization (LHCP) and the circular polarization of the first handedness may be right-hand circular polarization (RHCP).

The polarization of the transmitted and reflected light beams may be diagonal.

The polarization of the transmitted and reflected light beams may be orthogonal in the optical or electromagnetic sense to the polarization of the incident light beam.

### BRIEF DESCRIPTION OF THE DRAWINGS

FIG. 1A is a diagrammatical representation of a ranging system including a metasurface optical element, in accordance with this disclosure.
FIG. 1B is a diagrammatical representation of an alternate arrangement of the ranging system of FIG. 1A.
FIG. 2A is a diagrammatical representation of a modification to the ranging system of FIG. 1 to insert a quarter wave plate.
FIG. 2B is a diagrammatical representation of an alternate arrangement of the ranging system of FIG. 2A.

### DETAILED DESCRIPTION

The following disclosure enables a person skilled in the art to make and use the subject matter described herein. The general principles outlined in this disclosure can be applied to embodiments and applications other than those detailed above without departing from the spirit and scope of this disclosure. It is not intended to limit this disclosure to the embodiments shown, but to accord it the widest scope consistent with the principles and features disclosed or suggested herein.

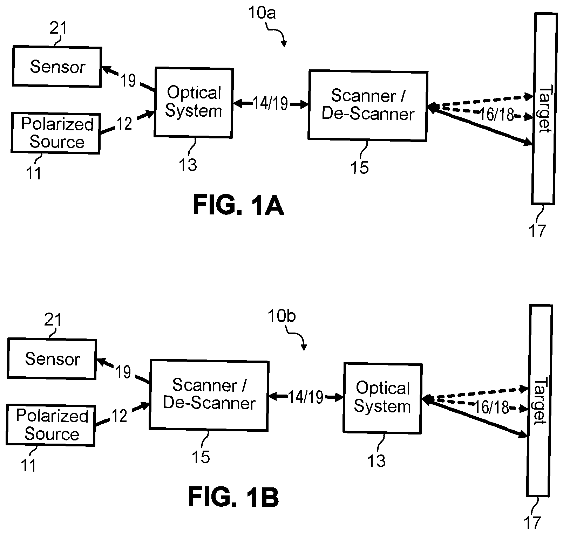

Recall the disadvantages previously mentioned regarding de-scanning type LIDAR, TOF, and 2D imaging systems, which typically require two scanners to both scan and de-scan the outgoing and incoming light. Described herein with reference to FIG. 1A is a ranging and imaging system 10a that addresses these issues through the use of metasurface optics.

Metasurface optics are ultrathin planar structures formed of unit cells made of subwavelength nanostructures that are specifically selected to introduce a spatially varying phase, and/or amplitude, and/or polarization shift across an incident light wave, which enables a wide range of optical functionalities. The components of a unit cell of a metasurface optic, such as nano-antennas, resonators, or dielectric structures, act by modifying the amplitude and phase of the electric and magnetic fields of the incident electromagnetic wave. The individual unit cells are arranged in a specific pattern that controls the amplitude and phase of the light wave.

The exact mechanism by which this control is achieved depends on the specific design of the metasurface optic and the properties of the individual unit cells, but in general, the unit cells of the metasurface optic can affect the phase of the incident light in several ways.

First, the unit cells may introduce a phase delay by using resonant nanostructures or nanosized waveguides that introduce a delay in the propagation of the incident light. The delay can be controlled by adjusting the specific geometry and material properties of the unit cells.

Second, the unit cells may introduce a phase gradient by arranging the unit cells in a specific pattern that creates a gradual change in the phase of the incident light. This can be used, for example, to focus or deflect the wave, or to create holographic patterns.

Third, and notably for the specific application disclosed herein, the unit cells may induce a polarization change or rotation. Indeed, some types of unit cells can alter or rotate the polarization of the incident light, which in turn can induce a phase shift. This can be used for polarization conversion or other optical functions.

Overall, the precise mechanism by which the unit cells of a metasurface optic induce phase shifts depends on the specific design of the metasurface optic and the properties of the individual unit cells, and the precise control of the phase shift distribution across the metasurface optic is of particular interest for achieving the desired optical function.

The ranging and imaging system 10a includes a source 11 of polarized light 12, such as one or more VCSELs or Edge-Emitting Lasers (EELs), or other light source where a suitable polarizing element has been introduced. When arranged in multiples, these laser sources may be structured into an array, potentially in a line format. Following the light source 11 is an optical system 13, which includes a single metasurface optical element (MOE). This MOE replaces a collection of traditional optical elements, as it manages both outgoing and incoming light through the same optical path, effectively countering the limitations seen in de-scanning type systems. As mentioned above, the MOE may make use of different types of unit cell, depending on the fabrication technology and/or the wavelength range of the processed light. The main criteria for suitability of the unit cells to the ranging systems described herein are: 1) that a sufficient range of phase modulation be available through the use of different geometry unit cells on the metasurface, such that their collective effect on the incident light is to apply an optical functionality such as focusing, collimating, deflecting, shaping, splitting, diffracting etc.; and 2) that the response of the unit cell elements be anisotropic with respect to the polarization of the incident light, such that the local wavefront modulation imparted by one unit cell is different for differently polarized light beams. A favorable, but not essential criterion 3), is that the elements forming the unit cell may be placed in a rotated fashion with respect to the axis normal to the surface. For illustration purposes, an example unit cell may be a pillar of subwavelength dimensions, made of high-dielectric constant material, placed in a medium with lower dielectric constant, and with a rectangular or elliptical cross-section, such that the phase retardation seen by a light beam is different depending on whether the electric field direction is parallel or perpendicular to the long axis of the pillar. However, any unit cell capable of respecting the criteria above may be considered for the ranging systems described herein.

As light 12 from the source 11 interacts with the MOE in the optical system 13, it is transitioned from an input given polarization state to another well specified polarization state for example transitioning from a specific linear polarization orientation (LP #1) to a particular circular polarization (CP #1). In this case, the MOE in the optical system 13 applies either a left-hand circular polarization (LHCP) or right-hand circular polarization (RHCP) to the light 12 emanating from the source 11. As this happens, the MOE in the optical system 13 also achieves collimation, introduces a deflection grating effect, and optionally produces a structured light beam 14, which is directed toward a micromirror or other scanning/de-scanning mechanism 15. This micromirror or scanning/de-scanning mechanism 15, either biaxial or uniaxial, scans the light beam 14 as an outgoing beam 16 having a #circular polarization (CP #2) of the opposite handedness as that of the beam 14 (as a result of reflection off the micromirror or other scanning/de-scanning mechanism 15), moving it in a scan pattern determined by the mirror's activity.

When this outgoing beam 16 encounters the target 17, it reflects back, as return beam 18 having the original circular polarization (CP #1), returning to the micromirror or scanning/de-scanning mechanism 15. Here, the micromirror or scanning/de-scanning mechanism 15 not only redirects the beam but also de-scans it, routing it as an incoming light beam 19 in a manner that allows it to ultimately hit a sensor 21 (e.g., a line of sensors such as single-photon avalanche diodes or fast photodiodes, or a single unit of the same sensor type, or a small grouping of the same, etc.) in a structured manner after passing through the MOE in the optical system 13. The light beam 19 has the circular polarization (CP #2) of the opposite handedness as the original circular polarization (CP #1).

The incoming beam 19 is then subjected to an inversion of its circular polarization by the MOE 13, converting it to a linear polarization LP#2 which is orthogonal to the initial polarization state LP #1. In addition to this, the MOE in the optical system 13 focuses the incoming light 20 onto sensor 21. It is to be remarked that the MOE in the optical system 13 may encode two separate optical lensing and/or deflection grating and/or light structuration functionalities depending on the polarization of the incoming light, independently on the side from which light impinges on the MOE in the optical system 13. This gives the ranging and imaging system 10a the ability to route light along two different paths depending on the polarization of incidence, which is utilized in order to achieve the spatial separation of source and detector. It is also to be noticed that following the MOE in the optical system 13, the transmitted light 14 and the received light 19 are overlapping spatially throughout the system. This enables the system to have a single limiting aperture, or stop, through which both light beams pass. The stop may thus be placed indifferently before or after the micromirror or scanning/de-scanning system depending on other system technical requirements.

To summarize: light 12 is transformed by the MOE within the optical system 13 from having a linear polarization to having circular polarization with a first handedness (CP #1) to produce structured light beam 14, which has its circular polarization reversed by the micromirror or scanning/de-scanning mechanism 15 to having a second handedness (CP #2) opposite to the first handedness (CP#1) to produce outgoing beam 16, which in turn has its circular polarization reversed by the target 17 to produce return beam 18 as having the first handedness (CP #1), which has its circular polarization reversed by the micromirror or scanning/de-scanning mechanism 15 to have the second handedness (CP #2), which is finally converted back to a different linear polarization by the MOE within the optical system 13 to produce beam 20.

Thus, the MOE within the optical system 13 uses both propagation and geometrical phase retardation, and its operation can be summarized as:
1. For light emitted toward the target 17: input linear polarization is transformed to either LHCP or RHCP, providing for collimation, grating, and structured light generation.
2. For light returning from the target 17: incoming circular polarization (opposite handedness of the outgoing light) is mapped back to linear polarization, with the MOE providing for focusing and optionally introducing another grating effect.

One aspect that will be appreciated by those of skill in the art is the handling of polarization crosstalk. In conventional two-aperture ranging systems, crosstalk occurs when some of the outgoing light directly enters the aperture through which light that has reflected off the target is to enter. However, in the single-aperture ranging and imaging system 10a, the crosstalk would manifest as a residual amount of the outgoing polarization state in the return light. This is addressed by the MOE within the optical system 13, which provides that residual polarization states (for instance, LHCP when expecting RHCP or vice versa) are directed back into the source 11, away from the detector in sensor 21. This design feature enhances the resilience of the system against potential interference from such polarization mismatches.

Although the ranging and imaging system 10a operates with specific polarization states, it is inherently adaptable to any four distinct polarization states, provided they are pairwise orthogonal; in particular, the polarization states of light impinging 16 and reflecting 18 from the target must be orthogonal in the optical sense. This property may be easily specified by those with skill in the art, for example using well-known techniques such as the Mueller-matrix or Jones calculus.

The ranging and imaging system 10a includes multiple advantages, primarily stemming from its streamlined simplicity. The use of a single metasurface optical element effectively reduces the number of required optical components, simplifying alignment and minimizing potential issues resulting from misalignment. This design is particularly advantageous for mobile applications - by requiring only a single aperture for both outgoing and return light, the system conserves valuable screen cutout area when positioned on the front of a mobile device for depth-sensing user authentication, scene mapping, laser autofocus, etc., eliminating the need for an additional aperture and allowing for a more compact and efficient design. This feature is not only beneficial when implemented on the front of a device but is also of use when positioned on the back of a mobile device. In this configuration, a single laser can be used perform comprehensive mapping and scanning tasks.

Variations of the design are envisioned. For example, in the ranging and imaging system 10b shown in FIG. 1B, the optical system 13 is downstream of the mirror or scanner/de-scanner 15 instead of being upstream of the mirror or scanner/de-scanner 15 as in the ranging and imaging system 10a of FIG. 1A.

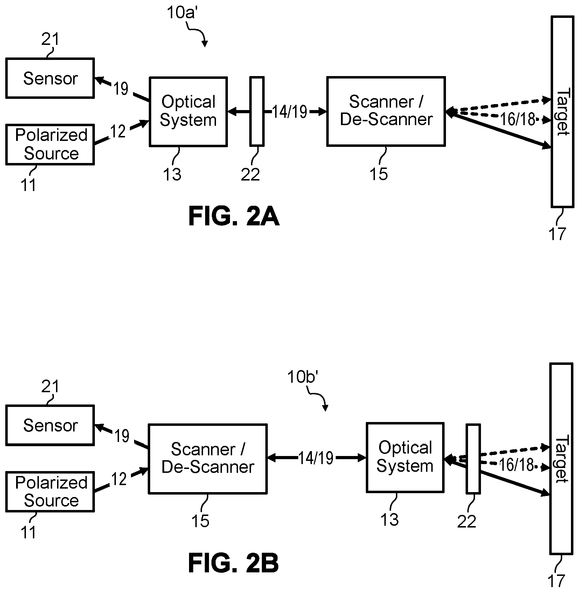

As another variation, shown in FIG. 2A, the ranging and imaging system 10a' has been further refined with the introduction of a quarter-wave plate 22 positioned between the MOE within the optical system 13 and the mirror or scanner/de-scanner 15. While the optical system 13 in FIG. 1 was responsible for transforming the linear polarization of light from the source 11 to circular polarization, this task is now performed by the quarter-wave plate 22 in FIG. 2A. As light from source 11 passes through the optical system 13, it maintains its linear polarization. Upon entering the quarter-wave plate 22, it is then converted to circular polarization, either left-hand or right-hand, depending on the orientation of the plate 22 and the input polarization. When the light returns from the target 17, after reflecting off the mirror or scanner/de-scanner 15, it again passes through the quarter-wave plate 22, converting its circular polarization back to linear. This alteration in design may allow for a more specialized tuning of the polarization transformation, providing greater flexibility in the optical design and potentially enhancing the overall performance of the ranging system 10a'.

As yet another variation shown in FIG. 2B, the ranging and imaging system 10b' of FIG. 2B is similar to the ranging and imaging system 10a' of FIG. 2A, except the optical system 13 is downstream of the mirror or scanner/de-scanner 15 instead of being upstream of the mirror or scanner/de-scanner 15.

The versatility of the ranging system disclosed herein is evident even in scenarios where scanning is not utilized. For applications demanding static imaging the use of a MOE to impart two types of polarization still offers benefits. By utilizing a single aperture combined with a single MOE, the system efficiently performs both ranging and imaging tasks, resulting in a streamlined design that's space-efficient and potentially more cost-effective.

Additionally, while one-dimensional scanning typically focuses on line generation, the inclusion of the MOE may adds a new level of adaptability., permitting the production of a variety of structured light patterns, including but not limited to grids, line arrays, and dot arrays. Such flexibility allows the system to be easily customized based on specific application needs, enabling diverse use-cases ranging from environmental mapping to object recognition.

To enhance adaptability, mirrors or prisms can be incorporated into either the incoming or outgoing optical path. This inclusion aids in making input/output coupling more convenient, facilitating better alignment or directionality based on the deployment environment.

Furthermore, while the MOE serves multiple functionalities in a compact form, the design of the system is not rigid. For optimization based on performance needs or other considerations, any given function of the MOE can be replaced with its corresponding bulk component. For instance, if the system requires wavelength filters, it might be beneficial, in certain situations, to integrate the wave plate with the filter, rather than embedding it within the MOE. Such modularity ensures that while the foundational concept of single-element scanning and de-scanning due to the use of a MOE remains intact, the system can adapt to fulfill specific demands, providing for robust performance in various contexts.

The ranging systems described above may be used to perform Time-of-Flight (TOF) or LiDAR sensing, performed by emitting structured light patterns onto the target and then analyzing the light that is reflected back to the system and detected by the sensor. The time taken for the light to travel from the source, reflect off the target, and return to the sensor is measured either directly or indirectly. Given the known speed of light, this duration can be translated into a precise distance measurement, allowing for the determination of distance to the target.

It is evident that further modifications and variations can be made to what has been described and illustrated herein without departing from the scope of this disclosure.

Although this disclosure has been described with a limited number of embodiments, those skilled in the art, having the benefit of this disclosure, can envision other embodiments that do not deviate from the disclosed scope. Furthermore, skilled persons can envision embodiments that represent various combinations of the embodiments disclosed herein made in various ways.

## Claims

1. A ranging system, comprising:
a source of polarized light configured to generate an emitted light beam;
a metasurface optical element (MOE) positioned to receive the emitted light beam from the source of polarized light and configured to transform the emitted light beam from having linear polarization to having circular polarization of a first handedness;
an optical element positioned to receive the emitted light beam from the MOE and direct the emitted light beam toward a target;
wherein the emitted light beam reflects off the target, and returns as a reflected light beam to be passed by the optical element back through the MOE as having circular polarization of a second handedness opposite to the first handedness;
wherein the MOE is positioned to receive the reflected light beam from the optical element and configured to transform the reflected light beam back to having the linear polarization;
a sensor configured to sense the reflected light beam.

2. The ranging system of claim 1, wherein the optical element comprises a scanner positioned to receive the emitted light beam after transmission through the MOE and configured to direct the emitted light beam toward the target and scan the emitted light beam across the target in a scan pattern, and to de-scan the reflected light beam reflected back from the target before transmission through the MOE.

3. The ranging system of claim 2, wherein the scanner comprises a micromirror.

4. The ranging system of anyone of claims 1 to 3, further comprising a quarter-wave plate positioned between the MOE and the optical element.

5. The ranging system of anyone of claims 1 to 4, wherein the circular polarization of the first handedness is left-hand circular polarization (LHCP) and the circular polarization of the second handedness is right-hand circular polarization (RHCP).

6. The ranging system of anyone of claims 1 to 4, wherein the circular polarization of the second handedness is left-hand circular polarization (LHCP) and the circular polarization of the first handedness is right-hand circular polarization (RHCP).

7. The ranging system of anyone of claims 1 to 6, wherein the MOE also functions to collimate the emitted light beam.

8. The system of anyone of claims 1 to 7, where only imaging, light detection, or measurement is performed by the system, and time-of-flight or ranging information is not utilized by the system.

9. A method of ranging, comprising:
generating an emitted light beam using a source of polarized light;
transmitting the emitted light beam through a metasurface optical element (MOE), thereby transforming the emitted light beam from having linear polarization to having circular polarization of a first handedness;
directing the transformed emitted light beam toward a target via an optical element;
receiving a reflected light beam reflected from the target by the optical element and directing the reflected light beam to the MOE as having circular polarization of a second handedness opposite the first handedness;
passing the reflected light through the MOE, transforming the reflected light beam back to having linear polarization; and
sensing the reflected light beam with a sensor.

10. The method of claim 9, further comprising: scanning the emitted light beam across the target in a scan pattern using a scanner positioned to receive the emitted light beam after transmission through the MOE; and de-scanning the reflected light beam reflected back from the target using the scanner before transmission through the MOE.

11. The method of claim 10, wherein the scanning and de-scanning are performed using one or more micromirrors.

12. The method of claim 10, wherein the scanning and de-scanning are performed using an acousto-optic modulator.

13. The method of anyone of claims 9 to 12, further comprising: passing the emitted light beam through a quarter-wave plate positioned between the MOE and the scanner.

14. The method of anyone of claims 9 to 13, wherein the polarization of the transmitted and reflected light beams is diagonal.

15. The method of anyone of claims 9 to 13, wherein the polarization of the transmitted and reflected light beams is orthogonal in the optical or electromagnetic sense to the polarization of the incident light beam.
